# EUROPÄISCHE PATENTSCHRIFT

(11) **EP 2 614 000 B1**
(45) Veröffentlichungstag und Bekanntmachung des Hinweises auf die Patenterteilung: **14.02.2018**
(21) Anmeldenummer: 11755276.0
(22) Anmeldetag: 06.09.2011
(51) Int. Cl.: B63H 21/38, B63H 23/06, F16H 57/04, B63H 23/30, B63H 23/32, B63H 5/125, B63H 23/04

(54) **GETRIEBE**
TRANSMISSION
BOÎTE DE VITESSES

(30) Priorität: 06.09.2010 DE 102010044436
(43) Veröffentlichungstag der Anmeldung: 17.07.2013
(73) Patentinhaber: REINTRIEB GmbH, 1070 Wien (AT)
(72) Erfinder: LAIS, Siegfried, 56322 Spay (DE)
(74) Vertreter: Metten, Karl-Heinz
(86) Internationale Anmeldenummer: PCT/EP2011/004480
(87) Internationale Veröffentlichungsnummer: WO 2012/031741

(56) Entgegenhaltungen:
- WO-A1-2005/100810
- WO-A2-2005/120798
- WO-A2-2007/109784
- DE-A1- 1 808 637
- DE-A1- 10 019 516
- DE-C- 875 771
- GB-A- 1 452 568
- GB-A- 2 164 308
- US-A- 3 487 805
- US-A- 4 948 384
- US-A1- 2007 253 656
- US-B1- 6 318 898
- WANG S Y ET AL: "Enhancement of surface properties of 45<#> carbon steel using plasma immersion ion implantation", THIN SOLID FILMS, ELSEVIER-SEQUOIA S.A. LAUSANNE, CH, Bd. 311, Nr. 1-2, 31. Dezember 1997 (1997-12-31), Seiten 190-195, XP004121341, ISSN: 0040-6090, DOI: 10.1016/S0040-6090(97)00465-3
- TEETER F J ET AL: "WEAR PROTECTION FOR GEARS", GEAR TECHNOLOGY, RANDALL PUBLISHING CO. ELK GROVE, ILLINOIS, US, Bd. 13, Nr. 2, 1. März 1996 (1996-03-01), Seiten 27-29, XP000550309, ISSN: 0743-6858

## Beschreibung

Die Erfindung betrifft ein Getriebe, insbesondere für ein Wasserfahrzeug, gemäß dem Oberbegriff des Anspruchs 1. Auch ist ein Verfahren zum Betreiben eines solchen Getriebes betroffen. Die Erfindung betrifft ferner ein Getriebe gemäß dem Oberbegriff des Anspruchs 11.

Herkömmliche Getriebe verwenden als Kühl- und Schmiermittel meist Öl. Um eine ausreichende Schmierung bzw. Kühlung gewährleisten zu können, müssen mehrere tausend Liter an Öl mitgeführt werden, die im Zuge des Kühlvorgangs bzw. Schmiervorgangs in das Getriebe gefördert und aus diesem wieder entfernt werden. Um ein Austreten des Öls nach Außen an die Umgebung zu verhindern, muss das Kühl- und Schmiersystem abgedichtet sein. Da ein Austreten des Öls zu einer Verschmutzung des Umgebungswassers führen würde, sind die Anforderungen an die Dichtigkeit des Getriebes und dessen Komponenten sehr hoch. Dieses erfordert aufwendige Konstruktionen der einzelnen Komponenten des Getriebes und erweist sich als sehr kostenintensiv. Darüber hinaus sind Besorgung und Entsorgung des Öls mit hohen Kosten verbunden. Schließlich geht für das Aufbewahren des Öls wertvoller Stauraum innerhalb des Wasserfahrzeugs verloren.

Die US 2007/253656 A1 betrifft eine Schiffsantriebsanordnung umfassend ein Kardanlager, welches gebildet ist aus einem Lagergehäusering, welcher eine innere Bohrung aufweist, wobei mindestens ein Teil dieser Innenbohrung mit einer Beschichtung versehen ist, die einen Trockenschmierstoff enthält. Ferner enthält das Kardanlager ein Lagerelement umfassend einen Außenring, der in die Innenbohrung des Lagergehäuses eingelassen ist, wobei zumindest ein Teil der Außenfläche des Außenringes mit einer Chromatbeschichtung versehen ist. Außerdem umfasst der Innenring eine innere Laufbohrung, eine äußere Oberfläche und zwei radiale Innenflächen, welche sich zwischen der inneren Laufbohrung und der äußeren Fläche erstrecken. Sowohl die innere Laufbohrung wie auch die äußere Oberfläche und die radialen Stirnflächen sind mit Chromat-enthaltenden Beschichtungen versehen. Mit der Schiffsantriebsanordnung gemäß der US 2007/0253656 A1 soll eine Vorrichtung zur Verfügung gestellt werden, enthaltend Komponenten, die relativ zueinander bewegbar sind, wie beispielsweise eine kardanische Lageranordnung, enthaltend einen Gehäusering und ein darin konzentrisch angeordnetes Lager. Die Vorrichtung gemäß der US 2007/0253656 A1 soll sich durch eine verbesserte Korrosionsbeständigkeit gegenüber marinen Umweltbedingungen auszeichnen. Auch sollen sich Baugruppen eines Kardanlagers auf leichtere Weise entfernen und austauschen lassen.

Die DE 875 771 C betrifft eine Antriebseinrichtung mit Kegelradgetriebe für den Propeller eines Wasserfahrzeugs mit einem Gleitlager. Die Propellerwelle wird mittels des Gleitlagers in einem Gehäuse gelagert. Die Lagerung und Räder des Kegelradantriebs werden durch Wasser geschmiert. Die DE 875 771 C offenbart die Merkmale des Oberbegriffs der Ansprüche 1 und 11. Aufgabe der vorliegenden Erfindung ist, ein verbessertes Getriebe vorzuschlagen, das einfach gebaut ist und bei dem die Kosten reduziert sind.

Die Aufgabe wird gelöst durch ein erstes erfindungsgemäßes Getriebe gemäß den Merkmalen des Patentanspruchs 1.

Von besonderem Vorteil ist, dass bei dem ersten erfindungsgemäßen Getriebe, aufgrund seiner Korrosionsbeständigkeit, auch auf Wasser oder eine wässrige Lösung als Kühl- und Schmiermittel zurückgegriffen werden kann.

Das erste erfindungsgemäße Getriebe stellt folglich ein wassergeschmiertes Getriebe dar. Das Kühl- und/oder Schmiermittel umfasst Wasser oder ein wässriges System. Das wässrige System kann dabei aus einer wässrigen Lösung gebildet sein.Dadurch, dass das Kühl- und Schmiermittel Wasser oder eine wässrige Lösung umfasst, kann von einer aufwändigen Abdichtung der Kühl- und Schmiervorrichtung abgesehen werden. Darüber hinaus kann bei dem Kühl- und Schmiermittel auf Umgebungswasser zurückgegriffen werden, das das erste Getriebe umgibt. Ein Vorsehen von Stauraum für das Kühl- und Schmiermittel innerhalb des Wasserfahrzeugs ist daher nicht mehr erforderlich.

Bevorzugt handelt es sich bei dem ersten Getriebe um eines, dass derart ausgelegt ist, Leistungen von größer als 111 kW, bevorzugt Leistungen von größer oder gleich 500 kW, bevorzugt Leistungen von größer oder gleich 1000 kW oder sogar von größer oder gleich 10.000 kW zu übertragen.

Das Gehäuse kann den ersten Kupplungsabschnitt und/oder den zweiten Kupplungsabschnitt in Gänze oder nur abschnittsweise umgeben. Letzterenfalls kann das Gehäuse zum Beispiel lediglich als Rahmen, Gestell oder Träger, insbesondere Tragarm, ausgebildet sein, das das erste Lager und/oder das zweite Lager stützt.

Die erste Welle und die zweite Welle sowie das erste Lager und das zweite Lager können aus einem beliebigen Material gebildet sein. Dieses kann bspw. Edelstahl umfassen oder aber einen herkömmlichen Stahl umfassen, insbesondere einen ferritischen Stahl.

Das korrosionsfeste Material oder die vor Korrosion schützende Beschichtung kann Keramik oder mindestens einen faserverstärkten keramischen Werkstoff oder mindestens einen korrisonsfesten Hartmetallwerkstoff oder mindestens einen nichtrostenden Stahl, insbesondere austenitischen Stahl, umfassen.

Es erweist sich als vorteilhaft, wenn der erste Kupplungsabschnitt und der zweite Kupplungsabschnitt jeweils mindestens ein Zahnrad umfassen, gebildet aus oder umfassend Keramik oder mindestens einem faserverstärkten keramischen Werkstoff oder mindestens einem korrosionsfesten Hartmetallwerkstoff oder mindestens einem nichtrostenden Stahl, insbesondere austenitischer Stahl, oder das zumindest an mindestens einer Zahnflanke mindestens eines Zahns des Zahnrads eine Beschichtung aufweist, die aus Keramik oder aus mindestens einem faserverstärkten keramischen Werkstoff oder aus mindestens einem korrosionsfesten Hartmetallwerkstoff, insbesondere austenitischem Stahl, gebildet ist. Bei den besonders bevorzugten Hartmetallwerkstoffen handelt es sich zum Beispiel um gesinterte Carbithartmetalle.

Unter nichtrostende Stähle im Sinne der vorliegenden Erfindung sollen solche Stähle verstanden werden, mit einem hohen Chromanteil, vorzugsweise von mehr als 10,5 %. Chrom ist hier vorzugsweise im austenitischen oder feritischen Mischkristall gelöst. Nichtrostende Stähle im Sinne der folgenden Erfindung umfassen auch solche, die zusätzlich als Legierungsbestandteile Nickel, Molybdän, Mangan und/oder Niob enthalten. Geeignete nichtrostende Stähle umfassen zum Beispiel die Legierung X5CrNi18-10 (Werkstoffnummer 1.4301) und X2CrNi18-9 (Werkstoffnummer 1.4307) sowie insbesondere auch X6CrNiMoTi17-12-2 (Werkstoffnummer 1.4571) und X2CrNiMo17-12-2 (Werkstoffnummer 1.4404). Weitere nichtrostende Stähle umfassen die Typen X30Cr13 und X50CrMoV15 sowie X2CrNiMoN22-5-3 (Werkstoffnummer 1.4462), X2CrTi12 (Werkstoffnummer 1.4512), X2CrTiNb18 (Werkstoffnummer 1.4509) und X3CrTi17 (Werkstoffnummer 1.4510). Darüber hinaus kommen als korrosionsbeständige Materialien für das erfindungsgemäße Getriebe auch Chrom-Nickel-Legierungen in Betracht, die weniger als 50 % Eisen enthalten, beispielsweise der Legierungstyp NiCr8020.

In einer Ausführungsform wird als bevorzugte nichtrostende Stähle auf austenitische Stähle zurückgegriffen. Bei austenitischen Stählen liegen γ-Kristalle von Eisenlegierungen vor. Als geeignete Austenitbildner sind Elemente wie Nickel, Kobalt, Kohlenstoff und Mangan bekannt.

Das Zahnrad kann also in Gänze einen korrosionsfesten Werkstoff umfassen oder aber lediglich die Zahnflanken mit einem solchen beschichtet sein. Hierdurch wird erreicht, dass bei Betrieb des ersten Getriebes die wesentlichen, Verschleiß ausgesetzten Komponenten des ersten Getriebes gegen Korrosion geschützt sind, was zu einem Reduzieren des Verschleisses des ersten Getriebes führt.

Bei einer alternativen Weiterbildung letztgenannten Erfindungsgedankens ist vorgesehen, dass der erste Kupplungsabschnitt und/oder der zweite Kupplungsabschnitt mindestens jeweils eine Schnecke mit jeweils mindestens einem Schneckenrad umfassen, gebildet aus oder umfassend Keramik oder mindestens einem faserverstärkten keramischen Werkstoff oder mindestens einem korrosionsfesten Hartmetallwerkstoff oder mindestens einem nichtrostenden Stahl, insbesondere austenitischem Stahl, oder das zumindest an mindestens einer Zahnflanke eines Schneckenrads mindestens eine Beschichtung aufweist, die aus Keramik oder mindestens einem faserverstärkten keramischen Werkstoff oder mindestens einem korrosionsfesten Hartmetallwerkstoff, insbesondere austenitischem Stahl gebildet ist.

Die Kupplungsabschnitte können grundsätzlich beliebig geformt sein, wenn sie derart zusammenwirken, dass ein Drehmoment von der ersten Welle auf die zweite Welle oder umgekehrt übertragbar ist. Dieses kann grundsätzlich mechanisch oder magnetisch erfolgen. Die Kupplungsabschnitte können im Falle einer mechanischen Übertragung von Drehmomenten grundsätzlich beliebig ausgeformt sein, solange sie mit der Geometrie des anderen Kupplungsabschnitts beim Übertragen der Kräfte einen Hinterschnitt bilden. Bevorzugt sind die Kupplungsabschnitte komplementär zueinander ausgebildet.

In Weiterbildung der Erfindung erweist es sich als vorteilhaft, wenn das erste Lager und/oder das zweite Lager mindestens einen nichtrostenden Stahl, insbesondere austenitischen Stahl, umfassen, der gehärtet oder verfestigt ist, insbesondere durch Nitrieren, Wandaufstickung, Kaltverfestigung, insbesondere Kugelstrahlen. In noch einer Weiterbildung der Erfindung erweist es sich als vorteilhaft, wenn der erste Kupplungsabschnitt und/oder der zweite Kupplungsabschnitt mindestens einem nichtrostenden Stahl, insbesondere austenitischen Stahl, umfassen, der gehärtet oder verfestigt ist, insbesondere durch Nitrieren, Wandaufstickung, Kaltverfestigung, insbesondere Kugelstrahlen. Solchenfalls ist gewährleistet, dass das erste erfindungsgemäße Getriebe auch zum Übertragen von hohen Drehmomenten einsetzbar ist.

Die Geometrie der einzelnen Zähne der Zahnräder der Kupplungsabschnitte kann grundsätzlich beliebig gewählt werden. Beispielsweise ist eine Polygonverzahnung denkbar. Allerdings wird bevorzugt, die Anzahl der Zähne und die Geometrie der Zähne an die jeweilige Belastung sowie an das Kühl- und Schmiermittel anzupassen. Wasser oder wässrige Lösungen besitzen eine geringere Zähigkeit (Viskosität) als Öle und lassen sich hierdurch bedingt, leichter auf einer Oberfläche verteilen. Darüber hinaus ist es denkbar, dass der erste Kupplungsabschnitt und der zweite Kupplungsabschnitt jeweils eine voneinander abweichende Anzahl an Zähnen aufweisen sowie dass die einzelnen Zähne der beiden Kupplungsabschnitte in Ihrer Geometrie voneinander abweichen. Ferner können die jeweiligen Zahnräder des ersten Kupplungsabschnitts und des zweiten Kupplungsabschnitts in Größe und Durchmesser voneinander abweichen oder gleich gebildet sein.

Erfindungsgemäß ist vorgesehen, dass die Kühl- und Schmiervorrichtung eine,mindestens eine Pumpe umfassende, Zuführeinheit aufweist bei der das Kühl- und Schmiermittel an oder zwischen die Kontaktflächen des ersten Kupplungsabschnitts und des zweiten Kupplungsabschnitts und des ersten Lagers und des zweiten Lagers zum hydrostatischen oder hydrodynamischen Schmieren förderbar ist.

Grundsätzlich ist es bei einer Ausführungsform denkbar, dass das erste Lager und/oder das zweite Lager hydrostatisch geschmiert werden. Hierfür kann solchenfalls eine Steuerung vorgesehen sein. Allerdings erweist es sich als kostengünstig, wenn das erste Lager und das zweite Lager hydrodynamisch geschmiert werden. Beim hydrodynamischen Schmieren wird das Kühl- und Schmiermittel durch die miteinander in Kontakt tretenden Bauteile auf der Oberfläche verteilt.

Darüber hinaus ist vorgesehen, dass auch der erste Kupplungsabschnitt und der zweite Kupplungsabschnitt hydrostatisch oder hydrodynamisch geschmiert werden.

Zum Kühlen des ersten Lagers und/oder des zweiten Lagers kann eine Kühlung mittels Wärmeleitung erfolgen. Hierbei sind die Lager mit einem Material mit hoher Wärmeleitfähigkeit verbunden, das die Wärme abtransportiert und beispielsweise an die Umgebung abgibt. Um bei hohen Drehzahlen ein Überhitzen zu vermeiden ist es bevorzugt, zusätzlich durch Einpressen des Kühl- und Schmiermittels in das erste Lager und/oder zweite Lager konvektiv zu kühlen. Vorteilhafter Weise wird hierdurch, neben der konvektiven Kühlung der Lager, auch eine Schmierung derselben erzielt.

Dieses gilt in gleicher Weise für den ersten Kupplungsabschnitt und/oder den zweiten Kupplungsabschnitt der sowohl durch das Hinzuführen des Kühl- oder Schmiermittels konvektiv gekühlt wird, aber auch zusätzlich mittels Wärmeleitung nach Außen kühlbar ist.

Grundsätzlich kann bei dem Wasser oder dem wässrigen System auch auf ein mitgeführtes Wasser oder eine mitgeführte wässrigen Lösung zurückgegriffen werden. Erfindungsgemäß ist es allerdings vorgesehen, dass das Kühl- und Schmiermittel Umgebungswasser umfasst, insbesondere Flusswasser oder Meereswasser. Hierdurch steht dem Getriebe ein nahezu unbegrenztes Reservoir an Kühl- und Schmiermittel zur Verfügung.

Das Kühl- und Schmiermittel kann unaufbereitetes Umgebungswasser umfassen. Es erweist sich aber als vorteilhaft, wenn die Kühl- und Schmiervorrichtung eine Aufbereitungseinheit umfasst, mit der dem Kühl- und Schmiermittel ein Zusatz hinzufügbar ist, der insbesondere Frostsschutzmittel, Glykole, Seife oder ein sonstiges das Kühl- und Schmiermittel entspannendes Mittel umfasst.

Hierdurch wird gewährleistet, dass das Kühl- und Schmiermittel nah an die Oberfläche der ersten Kupplungsvorrichtung und/oder der zweiten Kupplungsvorrichtung sowie des ersten Lagers und/oder des zweiten Lagers gelangt, insbesondere auch dann, wenn diese Oberfläche hydrophobe Eigenschaften besitzt.

Erfindungsgemäß ist es vorgesehen, dass die Aufbereitungseinheit der Kühl- und Schmiervorrichtung derart ausgebildet ist, dass mit ihr das Kühl- und Schmiermittel mittels eines Filters filterbar und reinigbar ist, insbesondere demineralisierbar und/oder deionisierbar ist.

Hierdurch wird erreicht, dass, wenn auf Umgebungswasser zurückgegriffen wird, dieses derart aufbereitet wird, dass Verschmutzungen, die das Getriebe beschädigen könnten, herausgefiltert werden. Darüber hinaus ist die Korrosionsfähigkeit des Getriebes weiter herabgesetzt und die Lebensdauer erhöht, wenn das Kühl- und Schmiermittel demineralisiert oder deionisiert ist.

Das erste Getriebe kann an beliebiger Stelle angeordnet sein, insbesondere außerhalb des Umgebungswassers. Solchenfalls wird das Kühl- und Schmiermittel an das erste Getriebe gefördert.

Bei einer Weiterbildung des ersten erfindungsgemäßen Getriebes ist vorgesehen, dass das erste Lager und/oder das zweite Lager aus Keramik oder einem faserverstärkten keramischen Werkstoff oder einem korrosionsfesten Hartmetallwerkstoffoder mindestens einem nichtrostenden Stahl, insbesondere austenitischen Stahl, gebildet ist oder das zumindest die jeweilige Lagerfläche mindestens eine Beschichtung aufweist, die aus Keramik oder aus mindestens einem faserverstärkten keramischen Werkstoff oder mindesten einem korrosionsfesten Hartmetallwerkstoff, insbesondere austenitischen Stahl, gebildet ist.

Das erste Lager und/oder das zweite Lager können aus einem beliebigen Lagermaterial gebildet sein. Es erweist sich als vorteilhaft, wenn das erste Lager und/oder das zweite Lager ein Gleitlager umfasst, das aus Kunststoff, Gummi, Bronze und/oder Stahl gebildet ist.

Das Gehäuse kann grundsätzlich beliebig gebildet sein. Beispielsweise kann das Gehäuse lediglich eine Aufnahme für das erste Lager und/oder das zweite Lager bilden. Darüber hinaus kann das Gehäuse auch derart ausgebildet sein, dass es den ersten und den zweiten Kupplungsabschnitt vollständig gegenüber der Umgebung abgrenzt.

Darüber hinaus kann das Gehäuse aus einem beliebigen Material gebildet sein. Es wird allerdings bevorzugt, wenn das Gehäuse aus einem Kunststoff, einem faserverstärkten

Kunststoff oder einem Kunststoff mit Stahleinlage gebildet ist. Solchenfalls ist das Gehäuse korrosionsfest und stabil ausgebildet.

Bei dem Getriebe kann es sich grundsätzlich um ein Winkelgetriebe oder um ein Verteilergetriebe handeln, bei dem entweder das Drehmoment um einen bestimmten Winkel umgelenkt wird oder aber das Drehmoment an zwei oder mehrere Wellen übertragen wird. Darüber hinaus kann das erste Getriebe in oder an einem Ruderpropeller, Z-Drive oder Azimuth-Thruster angeordnet sein.

Wenn das erste Getriebe ein Verteilergetriebe umfasst erweist es sich als vorteilhaft, dass mindestens eine erste Welle und mindestens zwei zweite Wellen vorgesehen sind, die insbesondere symmetrisch bezüglich der ersten Welle angeordnet sind und jeweils mit der ersten Welle - bezüglich ihrer Drehachsen - einen Winkel von 0 bis 90°, bevorzugt von 0 bis 60°, bevorzugt von 0 bis 45°, einschließen.

Darüber hinaus ist es denkbar, dass sowohl die erste Welle als auch die zweiten Wellen bezüglich ihrer Anstellung zueinander als auch bezüglich der Wasseroberfläche verstellbar sind, insbesondere auch während des Betriebs des ersten Getriebes.

Wenn das erste Getriebe ein Winkelgetriebe umfasst, erweist es sich als vorteilhaft, wenn es mindestens eine erste Welle und mindestens eine zweite Welle aufweist, die bezüglich ihrer Drehachsen einen Winkel von 0 bis 90°, bevorzugt von 0 bis 60°, bevorzugt von 0 bis 45°, miteinander einschließen.

Darüber hinaus kann vorgesehen sein, dass in der Kühl- und Schmiervorrichtung ein Korrosionselement angeordnet ist, das einen metallischen Werkstoff umfasst, dessen Neigung zur Korrosion zumindest höher ist als die Neigung zur Korrosion zumindest eines Abschnitts des ersten Kupplungsabschnitts der ersten Welle und des zweiten Kupplungsabschnitts der zweiten Welle und/oder des ersten Lagers und des zweiten Lagers.

Solchenfalls können des erste Lager und/oder das zweite Lager sowie der erste Kupplungsabschnitt und auch der zweite Kupplungsabschnitt einen, insbesondere ferritischen, Stahl umfassen. Durch das Korrosionselement ist die Korrosionsfähigkeit der Getriebeteile reduziert.

Die Aufgabe wird ferner durch ein zweites erfindungsgemäßes Getriebe, insbesondere für ein Wasserfahrzeug, gemäß dem Anspruch 11 gelöst.

Das zweite erfindungsgemäße Getriebe kann mit allen Merkmalen des ersten erfindungsgemäßen Getriebes kombiniert werden soweit die betroffenen Elemente im zweiten erfindungsgemäßen Getriebe vorgesehen sind.

Bevorzugt ist die Energievorrichtung durch eine Elektromaschine gebildet, die auf der ersten Welle angeordnet ist. Sie weist einen Stator und einen Rotor auf. Der Rotor ist durch einen Abschnitt der ersten Welle gebildet, wobei der Stator bevorzugt drehfest am Gehäuse angeordnet ist.

Zum Kühlen der Energievorrichtung wird Kühl- und Schmiermittel zwischen Rotor und Stator geführt.

Darüber hinaus wird die Aufgabe durch ein erfindungsgemäßes Verfahren zum Betreiben des ersten Getriebes nach einem der vorhergehenden Ansprüche, mit den Schritten:
- Bereitstellen eines erfindungsgemäßen Getriebes,
- Ansaugen eines durch Wasser oder eine wässrige Lösung gebildeten Kühl- und Schmiermittels aus der Umgebung,
- Filtern und Reinigen des Kühl- und Schmiermittels,
- Beaufschlagen des Kühl- und Schmiermittels mit Druck mittels einer Pumpe,
- Zuführen des Kühl- und Schmiermittels durch eine Zuführeinheit an eine erste Welle und an eine zweite Welle und an ein erste Lager und an ein zweites Lager,
- Abführen des Kühl- und Schmiermittels zurück an die Umgebung.

Das erfindungsgemäße wassergeschmierte Getriebe ermöglicht einen kostengünstigeren Betrieb als die vorbekannten ölgeschmierten Getriebe. Dieses wird zum einen dadurch erzielt, dass auf das Mitführen teuren Öls verzichtet werden kann. Zum anderen, wird Raum für Nutzlasten innerhalb des Wasserfahrzeugs gewonnen, der vormals für die Speicherung des Öls vorgesehen werden musste. Darüber hinaus erlaubt das erfindungsgemäße Getriebe eine Bauweise, die den hohen Dichtigkeitsanforderungen eines ölbetriebenen Getriebes nicht standhalten muss, da ein.

Austritt des als Kühl- und Schmiermittels verwendeten Wassers zu keiner Verschmutzung der Umwelt führt.

Weitere Merkmale, Einzelheiten und Vorteile der Erfindung ergeben sich aus den beigefügten Patentansprüchen und der zeichnerischen Darstellung und nachfolgender Beschreibung einer Ausführungsform der Erfindung.

In der Zeichnung zeigt:
- Figur 1: eine schematische Darstellung einer ersten Ausführungsform des ersten erfindungsgemäßen Getriebes;
- Figur 2: eine schematische Darstellung einer ersten Ausführungsform des zweiten erfindungsgemäßen Getriebes.

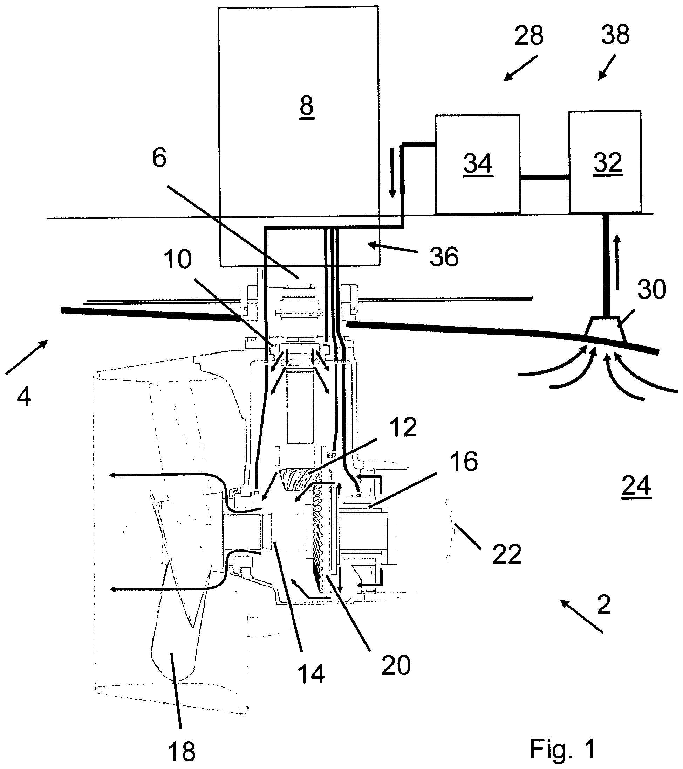

Figur 1 zeigt ein insgesamt mit dem Bezugszeichen 2 versehenes Getriebe, das an einem Wasserfahrzeug 4 angeordnet ist. Das Wasserfahrzeug 4 ist lediglich schematisch und nur in einem Bereich dargestellt, an dem das Getriebe 2 angeordnet ist.

Das erste Getriebe 2 umfasst eine erste Welle 6 die mit einer Energievorrichtung 8 verbindbar ist. Die Energievorrichtung 8 kann dabei sowohl eine Verbrennungsmaschine oder Elektromaschine, umfassen, wobei letztere sowohl motorisch als auch generatorisch betreibbar sein kann. Die erste Welle 6 ist in einem ersten Lager 10 drehbar gelagert. Die erste Welle 6 weist an einem Ende einen ersten Kupplungsabschnitt 12 auf, der bei dem in der Figur gezeigten Ausführungsbeispiel ein Zahnrad umfasst.

Das erste Getriebe 2 weist darüber hinaus eine zweite Welle 14 auf, die mit einer als Propeller ausgebildeten Kreiselmaschine 18 verbunden ist. Die zweite Welle 14 ist in einem zweiten Lager 16 drehbar gelagert und weist an ihrem freien Ende einen zweiten Kupplungsabschnitt 20 auf, der aus einem Zahnrad gebildet ist. Das Zahnrad des ersten Kupplungsabschnitts 12 und das Zahnrad des zweiten Kupplungsabschnitts 20 sind dabei komplementär ausgebildet, so dass die Zähne des ersten Kupplungsabschnitts 12 mit den Zähnen des zweiten Kupplungsabschnitts 20 kämmen können.

Erster Kupplungsabschnitt 12 und zweiter Kupplungsabschnitt 20 sind bei dem in der Figur dargestellten Ausführungsbeispiel im Wesentlichen in einem rechten Winkel zueinander angeordnet, so dass ein Drehmoment von der Energievorrichtung 8 über die erste Welle 6 mittels des ersten Kupplungsabschnitts 12 auf den zweiten Kupplungsabschnitt 20 der zweiten Welle 14 und dadurch auf die als Propeller ausgebildete Kreiselmaschine 18 übertragbar ist.

Darüber hinaus umfasst das erste Getriebe 2 ein Gehäuse 22, das bei dem gezeigten Ausführungsbeispiel den ersten Kupplungsabschnitt 12 und den zweiten Kupplungsabschnitt 20 gegenüber Umgebungswasser 24 abschirmt. In dem Gehäuse 22 sind das erste Lager 10 und das zweite Lager 16 gestützt. Zum Zuführen und zum Wiederabführen von Kühl- und Schmiermittel an die Kupplungsabschnitte 12, 20 ist eine Kühl- und Schmiervorrichtung 28 innerhalb des Wasserfahrzeugs vorgesehen. Das Kühl- und Schmiermittel umfasst Umgebungswasser 24. Zumindest der erste Kupplungsabschnitt 12 und/oder der zweite Kupplungsabschnitt 20 der zweiten Welle 14 und/oder das erste Lager 16 und/oder das zweite Lager 16 sind aus einem korrosionsfesten Material gebildet oder weisen einen Abschnitt mit einer vor Korrosion schützenden Beschichtung auf.

Im Folgenden wird auf die einzelnen Komponenten des ersten Getriebes 2 näher eingegangen:
Bei dem in Figur 1 gezeigten Ausfuhrungsbeispiel umfassen der erste Kupplungsabschnitt 12 und der zweite Kupplungsabschnitt 20 jeweils ein Zahnrad, das entweder aus einem korrosionsfesten Material gebildet ist oder aber eine vor Korrosion schützende Beschichtung aufweisen kann. Solchenfalls kann das Material oder die Beschichtung Keramik und/oder einen faserverstärkten keramischen Werkstoff und/oder einen korrosionsfesten Hartmetallwerkstoff und/oder mindestens einem nichtrostenden Stahl umfassen.
Alternativ können anstelle der Zahnräder aber auch Schnecken mit jeweils einem Schneckenrad vorgesehen sein, die solchenfalls ebenfalls aus einem korrosionsfesten Material gebildet sind oder eine Beschichtung wie oben genannt aufweisen.
An den ersten Kupplungsabschnitt 12 sowie an den zweiten Kupplungsabschnitt 20 wird mittels der Kühl- und Schmiervorrichtung 28 Kühl- und Schmiermittel zugeführt. Bei dem in Figur 1 gezeigten Ausführungsbeispiel sind der erste Kupplungsabschnitt 12 sowie der zweite Kupplungsabschnitt 20 in Gänze von Kühl- und Schmiermittel umgeben. Hierdurch wird Wärme an das Kühl- und Schmiermittel übergeben und durch dieses abgeführt. Darüber hinaus wird zwischen dem ersten Kupplungsabschnitt 12
und dem zweiten Kupplungsabschnitt 20 beim Betrieb des ersten Getriebes 2 ein hydrodynamischer Tragfilm ausgebildet.

Das die erste Welle 6 drehend lagernde erste Lager 10 und das die zweite Welle 14 drehend lagernde zweite Lager 16 umfassen ebenfalls entweder in Gänze ein korrosionsfestes Material oder aber zumindest an ihren Gleitlagerflächen eine derartige Beschichtung. Das korrosionsfeste Material kann dabei aus korrosionsfestem Stahl gebildet sein. Dieser ist bevorzugt gehärtet oder verfestigt wobei hierfür grundsätzlich, Randaufstickung und Kaltverfestigung wie Kugelstrahlen geeignet sind.

Die Kühl- und Schmiervorrichtung 28 ist sowohl mit dem ersten Lager 10 als auch mit dem zweiten Lager 16 derart verbunden, dass Kühl- und Schmiermittel in die Gleitlagerflächen hineinpressbar ist. Hierdurch wird eine hydrodynamische Schmierung erzielt. Allerdings ist es auch denkbar, eine Vielzahl an Verbindungen zwischen Kühl- und Schmiermittelvorrichtungen 28 und dem ersten Lager 10 sowie dem zweiten Lager 16 vorzusehen, die mittels einer Steuerung steuerbar ist, so dass ein hydrostatischer Tragfilm ausbildbar ist.

Die Kühl- oder Schmiervorrichtung 28 weist darüber hinaus eine Ansaugstelle 30 auf, die Umgebungswasser 24 ansaugt. Das Umgebungswasser 24 wird dann einem Filter 32 zugeführt und in diesem gereinigt. Das Reinigen des Umgebungswassers 24 kann dabei auch ein Demineralisieren sowie ein Deionisieren des Umgebungswassers 24 umfassen. Um das Umgebungswasser 24 anzusaugen und dem ersten Lager 10, dem zweiten Lager 16 sowie dem ersten Kupplungsabschnitt 12 und dem zweiten Kupplungsabschnitt 20 durch Leitungen 36 zuzuführen, ist eine Pumpe 34 vorgesehen, die stromab des Filters 32 angeordnet ist.

Bei dem in Figur 1 gezeigten ersten Getriebe 2 mit der Kreiselmaschine 18 ist sowohl ein Einsatz motorisch als auch generatorisch denkbar.

Besonderer Vorteil des erfindungsgemäßen erstes Getriebes 2 ist, dass kein zusätzliches Kühl- und Schmiermittel im Wasserfahrzeug 4 vorgesehen werden muss. Dadurch, dass auf Umgebungswasser 24 zurückgegriffen werden kann, sind die Dichtigkeitsanforderungen an das Gehäuse 22 des Getriebes 2 sehr gering, wodurch das erste Getriebe 2 einfach und kostengünstig herstellbar ist.

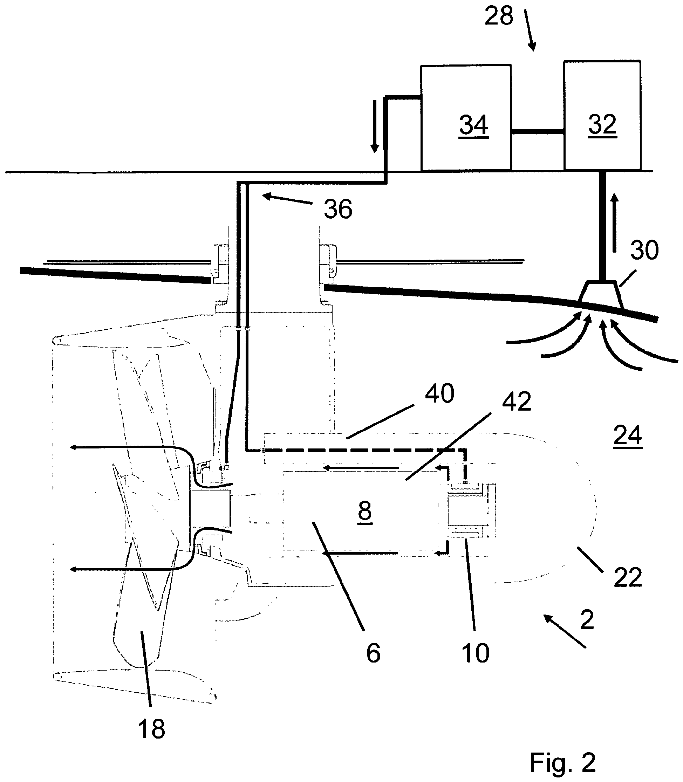

Figur 2 zeigt ein zweites erfindungsgemäßes Getriebe 2, bei dem die Energievorrichtung 8 an der ersten Welle 6 angeordnet ist. Bei der Energievorrichtung 8 handelt es sich bei dem dargestellten Ausführungsbeispiel um eine Elektromaschine, die einen Stator 40 und einen Rotor 42 umfasst. Der Rotor 42 ist durch einen Abschnitt an der ersten Welle 6 gebildet. Der Stator 40 ist drehfest mit dem Gehäuse 22 verbunden.

Die erste Welle 6 ist mit ihrem anderen Ende mit der Kreiselmaschine 18 verbunden.

Der Betrieb des zweiten erfindungsgemäßen Getriebes entspricht im Wesentlichen dem Betrieb des ersten erfindungsgemäßen Getriebes. Allerdings wird die von der Energievorrichtung erzeugte Energie nicht mittels Kupplungsabschnitte von der ersten Welle 6 auf die zweite Welle 14 übertragen, sondern unmittelbar auf die Kreiselmaschine 18 übertragen.

Zum Kühlen der ersten Welle 6, der Energievorrichtung 8 und des ersten Lagers 10 wird Kühl- und Schmiermittel aus der Umgebung mittels der Pumpe 34 angesaugt. Hierbei wird des Kühl- und Schmiermittel durch den Filter 32 gereinigt und durch die Leitungen 36 zugeführt.

Hierbei fliest das Kühl- und/oder Schiermittel durch das erste Lager 10. Anschließend wird es zwischen Stator 40 und Rotor 42 in Richtung auf die Kreiselmaschine 18 geführt, wo es wieder der Umgebung zurückgeführt wird.

Die in der vorstehenden Beschreibung, in den Ansprüchen sowie in den Zeichnungen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Getriebe (2), insbesondere für ein Wasserfahrzeug (4),
mit mindestens einer in einem ersten Lager (10) drehbar angeordneten ersten Welle (6), die mit einer Energievorrichtung (8), insbesondere Hydraulikmaschine, Verbrennungsmaschine oder Elektromaschine, die motorisch oder generatorisch betreibbar ist, verbindbar oder verbunden ist und an einem Ende einen ersten Kupplungsabschnitt (12) aufweist,
mit mindestens einer in einem zweiten Lager (16) drehbar angeordneten zweiten Welle (14), die mit einer Kreiselmaschine (18) verbindbar oder verbunden ist und die an einem Ende einen zweiten Kupplungsabschnitt (20) aufweist, der mit dem wenigstens einen ersten Kupplungsabschnitt (12) der mindestens einen ersten Welle (6) so anordenbar oder angeordnet ist, dass ein Drehmoment von der ersten Welle (6) auf die zweite Welle (14) oder umgekehrt übertragbar ist,
mit einem Gehäuse (22), das zumindest das erste Lager (10) der ersten Welle (6) und/oder zumindest das zweite Lager (16) der zweiten Welle (14) stützt und die Kupplungsabsclunitte (12, 20) wenigstens teilweise umgibt,
mit einer Kühl- und Schmiervorrichtung (28) zum Zuführen und zum Wiederabführen von Kühl- und Schmiermittel an die Kupplungsabschnitte (12,20) und an die Lager (10, 16) und an die erste Welle (6) und an die zweite Welle, wobei das Kühl- und Schmiermittel Umgebungswasser (24) umfasst,
**dadurch gekennzeichnet, dass**
die erste Welle (6) und die zweite Welle sowie der erste Kupplungsabschnitt (12) der ersten Welle (6) und der zweite Kupplungsabschnitt (20) der zweiten Welle (14) sowie das erste Lager (10) und das zweite Lager (16) jeweils mindestens in einem Abschnitt aus wenigstens einem korrosionsfesten Material gebildet sind oder ein solches Material umfassen,
wobei die Kühl- und Schmiervorrichtung (28) eine mindestens eine Pumpe (34) umfassende Zuführeinheit (36) aufweist, mit der das Kühl- und Schmiermittels (26) an oder zwischen die Kontaktflächen des ersten Kupplungsabschnitts (12) und des
zweiten Kupplungsabschnitts (20) und an Gleitlagerflächen des ersten Lagers (10) und des zweiten Lagers (16) zum hydrostatischen oder hydrodynamischen Schmieren förderbar ist,
wobei die Kühl- und Schmiervorrichtung eine Ansaugstelle (30) aufweist, die Umgebungswasser (24) ansaugt, wobei das Umgebungswasser (24) einem Filter (32) zuführbar und in diesem reinigbar ist, und wobei um das Umgebungswasser (24) anzusaugen und dem ersten Lager (10), dem zweiten Lager (16) sowie dem ersten Kupplungsabschnitt (12) und dem zweiten Kupplungsabschnitt (20) durch Leitungen (36) zuzuführen, die Pumpe (34) vorgesehen ist.

2. Getriebe (2) nach Anspruch 1, **dadurch gekennzeichnet, dass** das korrosionsfeste Material Keramik oder mindestens einen faserverstärkten keramischen Werkstoff oder mindestens einen nichtrostenden Stahl, insbesondere austenitischen Stahl, umfasst.

3. Getriebe (2) nach Anspruch 1 oder 2, **dadurch gekennzeichnet, dass** der erste Kupplungsabschnitt (12) und der zweite Kupplungsabschnitt (20) jeweils mindestens ein Zahnrad umfassen, gebildet aus oder umfassend Keramik oder mindestens einen faserverstärkten keramischen Werkstoff oder mindestens einen nichtrostenden Stahl, insbesondere austenitischen Stahl.

4. Getriebe (2) nach einem oder mehreren der vorhergehenden Ansprüche, **dadurch gekennzeichnet, dass**
die erste Welle (6) und die zweite Welle und/oder das erste Lager (10) und das zweite Lager (16) jeweils mindestens in einem Abschnitt mindestens eine vor Korrosion schützende Beschichtung aufweisen, die Keramik oder mindestens einen faserverstärkten keramischen Werkstoff oder mindestens einen nichtrostenden, insbesondere austenitischen, Stahl umfasst.

5. Getriebe (2) nach Anspruch 1, 2 oder 4, **dadurch gekennzeichnet, dass**
der erste Kupplungsabschnitt (12) und der zweite Kupplungsabschnitt (20) jeweils mindestens eine Schnecke mit jeweils mindestens einem Schneckenrad umfassen, wobei die Schnecke zumindest an mindestens einer Zahnflanke mindestens eines Schneckenrads mindestens eine Beschichtung aufweist, die aus Keramik oder aus mindestens einem faserverstärkten keramischen Werkstoff oder aus mindestens einem nichtrostenden Stahl, insbesondere austenitischer Stahl, gebildet ist.

6. Getriebe (2) nach einem oder mehreren der vorhergehenden Ansprüche, **dadurch gekennzeichnet, dass**
der erste Kupplungsabschnitt (12) und der zweite Kupplungsabschnitt (20) und das erste Lager (10) und das zweite Lager (16) einen nichtrostenden Stahl, insbesondere austenitischen Stahl, umfasst, der gehärtet oder verfestigt ist, insbesondere durch Nitrieren, Randaufstickung oder Kaltverfestigung, insbesondere Kugelstrahlen.

7. Getriebe (2) nach einem oder mehreren der vorhergehenden Ansprüche, **dadurch gekennzeichnet, dass**
das erste Lager (10) und/oder das zweite Lager (16) ein Gleitlager umfasst, das aus Kunststoff, Gummi, Bronze oder nichtrostendem Stahl, insbesondere austenitischem Stahl, gebildet ist.

8. Getriebe (2) nach einem oder mehreren der vorhergehenden Ansprüche, **dadurch gekennzeichnet, dass**
das Gehäuse (22) aus einem Kunststoff, einem faserverstärkten Kunststoff und/oder einem Kunststoff mit Stahleinlage gebildet ist.

9. Getriebe (2) nach einem der vorhergehenden Ansprüche, **dadurch gekennzeichnet, dass**
in der Kühl- und Schmiervorrichtung (28) ein Korrosionselement angeordnet ist, das einen metallischen Werkstoff umfasst, dessen Neigung zur Korrosion zumindest höher ist als die Neigung zur Korrosion zumindest eines Abschnitts der ersten Welle (6) und der zweiten Welle und des ersten Lagers (10) und des zweiten Lagers (16).

10. Getriebe (2) nach Anspruch 9, **dadurch gekennzeichnet, dass** das Korrosionselement einen ferritischen Werkstoffumfasst.

11. Getriebe (2), insbesondere für ein Wasserfahrzeug (4),
mit mindestens einer in einem ersten Lager (10) drehbar angeordneten ersten Welle (6), die einerseits mit einer Energievorrichtung (8), insbesondere Hydraulikmaschine, Verbrennungsmaschine oder Elektromaschine, die motorisch oder generatorisch betreibbar ist, verbindbar oder verbunden ist und die andererseits mit einer Kreiselmaschine (18) verbindbar oder verbunden ist,
mit einem Gehäuse (22), das zumindest das erste Lager (10) der ersten Welle (6) stützt und wenigstens teilweise umgibt,
mit einer Kühl- und Schmiervorrichtung (28) zum Zuführen und zum wieder Abführen von Kühl- und Schmiermittel an das erste Lager (10) und an die erste Welle (6), wobei das Kühl- und Schmiermittel Umgebungswasser umfasst,
**dadurch gekennzeichnet, dass**
die erste Welle (6) und das erste Lager (10) jeweils mindestens in einem Abschnitt aus wenigstens einem korrosionsfesten Material gebildet sind oder ein solches Material umfassen,
wobei die Kühl- und Schmiervorrichtung (28) eine mindestens eine Pumpe (34) umfassende Zuführeinheit (36) aufweist, mit der das Kühl- und Schmiermittel (26) an Gleitlagerflächen des ersten Lagers (10) zum hydrostatischen oder hydrodynamischen Schmieren förderbar ist,
wobei die Kühl- und Schmiervorrichtung eine Ansaugstelle (30) aufweist, die Umgebungswasser (24) ansaugt, wobei das Umgebungswasser (24) einem Filter (32) zuführbar und in diesem reinigbar ist, und wobei um das Umgebungswasser (24) anzusaugen und dem ersten Lager (10) durch eine Leitung (36) zuzuführen, die Pumpe (34) vorgesehen ist.

12. Verfahren zum Betreiben eines Getriebes (2) nach einem der Ansprüche 1 bis 10 mit den Schritten:
Ansaugen des durch Umgebungswasser (24) gebildeten Kühl- und
Schmiermittels aus der Umgebung,
Filtern und Reinigen des Kühl- und Schmiermittels,
Beaufschlagen des Kühl- und Schmiermittels mit Druck mittels der Pumpe,
Zuführen des Kühl- und Schmiermittels durch die Zuführeinheit an die erste Welle (6) und an die zweite Welle (14) und an den ersten Lager (10) und an den zweiten Lager (16), und
Abführen des Kühl- und Schmiermittels zurück an die Umgebung.

## Claims

1. A gearbox (2), in particular for a watercraft (4),
with at least one first shaft (6) which is rotatably arranged in a first bearing (10), which is connectable or connected to an energy device (8), in particular a hydraulic engine, combustion engine or electric engine, which can be driven motorically or by means of a generator, and which features a first coupling section (12) on one end,
with at least one second shaft (14) rotatably arranged in a second bearing (16), which is connectable or connected to a centrifugal machine (18) and which has on one end a second coupling section (20) which is arrangable or arranged with the at least one first coupling section (12) of the at least one first shaft (6) in such a manner that a torque can be transmitted from the first shaft (6) to the second shaft (14) or vice-versa,
with a housing (22) which supports at least the first bearing (10) of the first shaft (6) and/or at least the second bearing (16) of the second shaft (14) and at least partially surrounds the coupling sections (12, 20),
with a cooling and lubricating device (28) for adding and again discharging coolant and lubricant to the coupling sections (12, 20) and to the bearings (10, 16) and to the first shaft (6) and to the second shaft, wherein the coolant and lubricant comprises surrounding water (24),
**characterized in that**
the first shaft (6) and the second shaft, and also the first coupling section (12) of the first shaft (6) and the second coupling section (20) of the second shaft (14) and the first bearing (10) and the second bearing (16) are respectively formed at least in one section from at least one corrosion-resistant material, or comprise such material,
wherein the cooling and lubricating device (28) has a feed unit (36) comprising at least one pump (34), with which the coolant and lubricant (26) can be transported to or between the contact surfaces of the first coupling section (12) and of the second coupling section (20) and to the sliding bearing surfaces of the first bearing (10) and of the second bearing (16) for hydrostatic or hydrodynamic lubrication, wherein the cooling and lubrication device has a suction point (30) which suctions in the surrounding water (24), wherein the surrounding water (24) can be fed to a filter (32) and can be cleaned in said filter, and wherein the pump (34) is provided in order to suction in the surrounding water (24) and to feed it to the first bearing (10), the second bearing (16) and to the first coupling section (12) and the second coupling section (20) through lines (36).

2. The gearbox (2) according to Claim 1, **characterized in that** the corrosion-resistant material comprises ceramic or at least one fibre-reinforced ceramic material, or at least one rustproof steel, in particular austenitic steel.

3. The gearbox (2) according to Claim 1 or 2, **characterized in that** the first coupling section (12) and the second coupling section (20) respectively comprise at least one gearwheel, formed from or comprising ceramic or at least one fibre-reinforced ceramic material or at least one rustproof steel, in particular austenitic steel.

4. The gearbox (2) according to one or more of the preceding claims, **characterized in that**
the first shaft (6) and the second shaft and/or the first bearing (10) and the second bearing (16) respectively have at least in one section at least one coating that protects against corrosion, which comprises ceramic or at least one fibre-reinforced ceramic material or at least one rustproof, in particular austenitic, steel.

5. The gearbox (2) according to Claim 1, 2 or 4, **characterized in that** the first coupling section (12) and the second coupling section (20) respectively comprise at least one screw with at least one screw wheel respectively, wherein the screw has at least one coating on at least one screw wheel on at least one tooth flank, which is made of ceramic or from at least one fibre-reinforced ceramic material or at least one rustproof steel, in particular austenitic steel.

6. The gearbox (2) according to one or more of the preceding claims, **characterized in that**
the first coupling section (12) and the second coupling section (20) and the first bearing (10) and the second bearing (16) comprises a rustproof steel, in particular austenitic steel, which is hardened or consolidated, in particular through nitration, solution nitriding or strain hardening, in particular shot peening.

7. The gearbox (2) according to one or more of the preceding claims, **characterized in that**
the first bearing (10) and/or the second bearing (16) comprises a sliding bearing which is made of plastic, rubber, bronze or rustproof steel, in particular austenitic steel.

8. The gearbox (2) according to one or more of the preceding claims, **characterized in that**
the housing (22) is made of a plastic, a fibre-reinforced plastic and/or a plastic with a steel insert.

9. The gearbox (2) according to one or more of the preceding claims, **characterized in that**
a corrosion element is arranged in the cooling and lubricating device (28) which comprises a metallic material, the inclination to corrosion of which is at least higher than the inclination to corrosion of at least one section of the first shaft (6) and of the second shaft and of the first bearing (10) and of the second bearing (16).

10. The gearbox (2) according to Claim 9, **characterized in that** the corrosion element comprises a ferritic material.

11. A gearbox (2), in particular for a watercraft (4),
with at least one first shaft (6) which is rotatably arranged in a first bearing (10), which is connectable or connected on the one hand to an energy device (8), in particular a hydraulic engine, combustion engine or electric engine, which can be driven motorically or by means of a generator, and on the other hand is connectable or connected to a centrifugal machine (18),
with a housing (22) which supports and at least partially surrounds the first bearing (10) of the first shaft (6),
with a cooling and lubricating device (28) for adding and again discharging coolant and lubricant to the first bearing (10) and to the first shaft (6), wherein the coolant and lubricant comprises surrounding water (24),
**characterized in that**
the first shaft (6) and the first bearing (10) and the second bearing (16) are respectively formed at least in one section from at least one corrosion-resistant material, or comprise such material,
wherein the cooling and lubricating device (28) has a feed unit (36) comprising at least one pump (34), with which the coolant and lubricant (26) can be transported to the sliding bearing surfaces of the first bearing (10) for hydrostatic or hydrodynamic lubrication,
wherein the cooling and lubrication device has a suction point (30) which suctions in the surrounding water (24), wherein the surrounding water (24) can be fed to a filter (32) and can be cleaned in said filter, and wherein the pump (34) is provided in order to suction in the surrounding water (24) and to feed it to the first bearing (10) through lines (36).

12. A method for driving a gearbox (2) according to any one of Claims 1 to 10, with the following steps:
suctioning coolant and lubricant formed by the water from the surrounding,
filtering and cleaning the coolant and lubricant,
applying pressure to the coolant and lubricant by means of the pump,
feeding of the coolant and lubricant through the feed unit to the first shaft (6) and to the second shaft (14) and to the first bearing (10) and to the second bearing (16), and
discharging the coolant and lubricant back to the surrounding.

## Revendications

1. Transmission (2), en particulier pour un bateau (4),
avec au moins un premier arbre (6) qui est monté de manière à pouvoir tourner dans un premier palier (10), qui est reliable ou relié à un dispositif de puissance (8), notamment une machine hydraulique, un moteur thermique ou une machine électrique, entraîné par un moteur ou un générateur, et qui présente une partie d'accouplement (12) à une extrémité,
avec au moins un deuxième arbre (16) qui est monté de manière à pouvoir tourner dans un deuxième palier (14), qui est reliable ou relié à une machine rotative (18) et qui présente une deuxième partie d'accouplement (20) à une extrémité, ladite partie d'accouplement pouvant être disposée ou étant disposée par rapport à au moins une première partie d'accouplement (12) d'au moins un premier arbre (6) de telle sorte qu'un couple de rotation puisse être transmis du premier arbre (6) au deuxième arbre (14) ou inversement,
avec un carter (22), qui soutient au moins le premier palier (10) du premier arbre (6) et/ou au moins le deuxième palier (16) du deuxième arbre (14) et qui entoure au moins partiellement les parties d'accouplement (12, 20),
avec un dispositif réfrigérant et lubrifiant (28) servant à introduire et à réévacuer les produits réfrigérants et lubrifiants sur les parties d'accouplement (12, 20), sur les paliers (10, 16), sur le premier arbre (6) et sur le deuxième arbre, pour lequel ledit dispositif réfrigérant et lubrifiant comprend de l'eau environnante (24),
**caractérisée en ce que**
le premier arbre (6) et le deuxième arbre, la première partie d'accouplement (12) du premier arbre (6) et la deuxième partie d'accouplement (20) du deuxième arbre (14), ainsi que le premier palier (10) et le deuxième palier (16) sont respectivement formés, au moins dans une partie, d'au moins un matériau résistant à la corrosion ou comprennent un tel matériau,
dans laquelle le dispositif réfrigérant et lubrifiant (28) présente une unité d'amenée (36) comprenant au moins une pompe (34), unité d'alimentation avec laquelle le produit réfrigérant et lubrifiant (26) peut être acheminé vers les surfaces de contact ou entre les surfaces de contact de la première partie d'accouplement (12) et de la deuxième partie d'accouplement (20) et sur les surfaces de palier lisse du premier palier (10) et du deuxième palier (16) pour une lubrification hydrostatique ou hydrodynamique,
dans laquelle le dispositif réfrigérant et lubrifiant présente un point d'aspiration (30), qui aspire l'eau environnante (24), pour laquelle l'eau environnante (24) peut être acheminée vers un filtre (32) et peut être nettoyée à l'intérieur de celui-ci, et pour laquelle une pompe (34) est prévue pour aspirer l'eau environnante (24) et l'acheminer vers le premier palier (10), vers le deuxième palier (16) ainsi que vers la première partie d'accouplement (12) et vers la deuxième partie d'accouplement (20) par des conduits (36).

2. Transmission (2) selon la revendication 1, **caractérisée en ce que**
le matériau résistant à la corrosion comprend de la céramique ou au moins un matériau céramique renforcé par des fibres ou au moins de l'acier inoxydable, en particulier de l'acier austénitique.

3. Transmission (2) selon la revendication 1 ou 2, **caractérisée en ce que**
la première partie d'accouplement (12) et la deuxième partie d'accouplement (20) comprennent respectivement une roue dentée, qui est formée à partir de ou qui comprend de la céramique ou au moins un matériau céramique renforcé par des fibres ou au moins de l'acier inoxydable, en particulier de l'acier austénitique.

4. Transmission (2) selon l'une ou plusieurs des revendications précédentes, **caractérisée en ce que**
le premier arbre (6) et le deuxième arbre et/ou le premier palier (10) et le deuxième palier (16) présentent respectivement dans une partie au moins un revêtement résistant à la corrosion, qui comprend de la céramique ou au moins un matériau céramique renforcé par des fibres ou au moins de l'acier inoxydable, en particulier de l'acier austénitique.

5. Transmission (2) selon la revendication 1, 2 ou 4, **caractérisée en ce que**
la première partie d'accouplement (12) et la deuxième partie d'accouplement (20) comprennent respectivement au moins une vis sans fin avec respectivement au moins une roue tangente, pour laquelle la vis sans fin présente au moins sur un flanc de dent d'au moins une roue tangente au moins un revêtement, qui est formé à partir de céramique ou au moins à partir d'un matériau céramique renforcé par des fibres ou au moins à partir d'un acier inoxydable, en particulier un acier austénitique.

6. Transmission (2) selon l'une ou plusieurs des revendications précédentes, **caractérisée en ce que**
la première partie d'accouplement (12) et la deuxième partie d'accouplement (20) ainsi que le premier palier (10) et le deuxième palier (16) comprennent un acier inoxydable, en particulier un acier austénitique, qui est durci ou trempé, notamment par nitruration, par nitruration des bords ou par écrouissage, en particulier par grenaillage.

7. Transmission (2) selon l'une ou plusieurs des revendications précédentes, **caractérisée en ce que**
le premier palier (10) et/ou le deuxième palier (16) comprend un palier lisse formé à partir de matière plastique, de caoutchouc, de bronze ou d'acier inoxydable, en particulier d'acier austénitique.

8. Transmission (2) selon l'une ou plusieurs des revendications précédentes, **caractérisée en ce que**
le carter (22) est formé à partir d'une matière plastique, d'une matière plastique renforcée par des fibres et/ou d'une matière plastique avec une pièce intercalaire en acier.

9. Transmission (2) selon l'une des revendications précédentes, **caractérisée en ce qu'**un
élément de corrosion est disposé dans le dispositif réfrigérant et lubrifiant (28), ledit élément de corrosion comprenant un matériau métallique dont la tendance à la corrosion est au moins supérieure à la tendance à la corrosion d'au moins une partie du premier arbre (6) et du deuxième arbre, du premier palier (10) et du deuxième palier (16).

10. Transmission (2) selon la revendication 9, **caractérisée en ce que** l'élément de corrosion comprend un matériau ferritique.

11. Transmission (2), en particulier pour un bateau (4),
avec au moins un premier arbre (6) qui est monté de manière à pouvoir tourner dans un premier palier (10), qui est d'une part reliable ou relié à un dispositif de puissance (8), notamment une machine hydraulique, un moteur thermique ou une machine électrique, entraîné par un moteur ou un générateur, et qui est d'autre part reliable ou relié à une machine rotative (18),
avec un carter (22), qui soutient au moins le premier palier (10) du premier arbre (6) et qui l'entoure au moins partiellement,
avec un dispositif réfrigérant et lubrifiant (28) servant à introduire et à réévacuer les produits réfrigérants et lubrifiants vers le premier palier (10) et vers le premier arbre (6), dans lequel le produit réfrigérant et lubrifiant comprend de l'eau environnante, **caractérisée en ce que**
le premier arbre (6) et le premier palier (10) sont respectivement formés, au moins dans une partie, à partir d'un matériau résistant à la corrosion ou comprennent un tel matériau,
dans laquelle le dispositif réfrigérant et lubrifiant (28) présente une unité d'amenée (36) comprenant au moins une pompe (34), unité d'amenée avec laquelle le produit réfrigérant et lubrifiant (26) peut être acheminé vers les surfaces de palier lisse du premier palier (10) pour une lubrification hydrostatique ou hydrodynamique,
dans laquelle le dispositif réfrigérant et lubrifiant présente un point d'aspiration (30), qui aspire l'eau environnante (24), pour laquelle l'eau environnante (24) peut être acheminée vers un filtre (32) et peut être nettoyée à l'intérieur de celui-ci, et pour laquelle la pompe (34) est prévue pour aspirer l'eau environnante (24) et l'acheminer vers le premier palier (10) par des conduits (36).

12. Procédé de fonctionnement d'une transmission (2) selon l'une des revendications 1 à 10 comprenant les étapes suivantes :
Aspiration d'un produit réfrigérant et lubrifiant constitué par de l'eau à partir de l'environnement,
Filtration et nettoyage du produit réfrigérant et lubrifiant,
Alimentation du produit réfrigérant et lubrifiant sous pression au moyen de la pompe,
Introduction du produit réfrigérant et lubrifiant par le biais de la unité d'amenée dans le premier arbre (6) et dans le deuxième arbre (14), dans le premier palier (10) et dans le deuxième palier (16), puis
Réévacuation du produit réfrigérant et lubrifiant dans l'environnement.
